# EUROPEAN PATENT SPECIFICATION

(11) **EP 3 349 398 B1**
(45) Date of publication and mention of the grant of the patent: **23.09.2020**
(21) Application number: 17208359.4
(22) Date of filing: 19.12.2017
(51) Int. Cl.: H04L 12/26, G06F 11/07, G06F 11/00, G06F 11/30, G06F 21/00, G06F 21/55

(54) **METHOD FOR MONITORING AN IOT DEVICE AND USING IT AS BATTERY PROTECTION WATCHDOG FOR IOT DEVICES**
VERFAHREN ZUR ÜBERWACHUNG EINER IOT-VORRICHTUNG UND DEREN VERWENDUNG ALS BATTERIESCHUTZ-WATCHDOG FÜR IOT-VORRICHTUNGEN
PROCÉDÉ POUR SURVEILLER UN DISPOSITIF D'INTERNET DES OBJETS ET L'UTILISER COMME CHIEN DE GARDE DE PROTECTION DE BATTERIE POUR DES DISPOSITIFS D'INTERNET DES OBJETS

(30) Priority: 13.01.2017 EP 17151411
(43) Date of publication of application: 18.07.2018
(73) Proprietor: Shenzhen Goodix Technology Co., Ltd., Shenzhen, Guangdong 518045 (CN)
(72) Inventor: Müller, Peter, 01279 Dresden (DE)
(74) Representative: Lippert Stachow Patentanwälte Rechtsanwälte Partnerschaft mbB

(56) References cited:
- WO-A1-2016/140912
- US-A1- 2015 163 121
- US-A1- 2016 212 099

## Description

The invention discloses a method of monitoring an Internet-of-Things (IoT) device.

The importance of securing these devices is gaining more and more focus. The present security level of many IoT devices is poor. First distributed denial of service (DDOS) attacks by smart home and IoT products have been registered in 2016. Successfully attacks on light control systems are already known.

Issue and failure monitoring solutions in present communication systems, e.g. PCs, notebooks, mobile phones or tablets, are mainly software based. But they can also contain issues and are sensitive to hacking attacks. Present solutions for IoT devices were derived from that kind of products but do not fully match to the need of these kinds of new products.

Hardware based and therefore software independent security features (watchdogs) are known on integrated circuit (IC) level for mainly IC protection purposes, e.g. under/over voltage protection and aging. The IC stops its activity if the watchdog notices that something is wrong.

A massive amount of network devices that physically cannot always be accessed to e.g. apply a hard reset by a reset button or removing/recharging the battery is a new topic that requires new technical solutions. Protecting the power supply from unwanted discharging is a common task for communication systems in aerospace applications but its high priority is rather new in very low-priced, high-volume consumer products.

The category of Internet-of-things (IoT) devices is rather new. These devices are usually connected to a network. They are cheaply produced and sold in large quantities. These products are of course not absolute free of hardware and software bugs.

A conventional system for behavioral analysis when monitoring IoT devices is known from WO2016/140912 A1. Simple and robust methods need to be established to protect them from malfunction which may cause total device failure or an unwanted distortion of other devices and (network) services. Basic security features should be simple to implement and software independent to increase its reliability and to prevent them from hacking attacks.

Many IoT devices cannot be accessed physically once they put into operation. These are e.g. sensors in street grounds, animals or at other not easily accessible places. Protecting the battery power of these devices is important because the battery cannot be recharged or replaced. If the battery is discharged the complete system is destroyed. So, preventing the battery from unwanted discharging due to device malfunction issues (e.g. high computation load, permanent reboot or permanent RF transmission) due to a hardware/software failure or a hacking attack is important for IoT devices.

It is therefore the objective of the invention to provide a method that can detect device malfunction issues. The invention should help to prevent hacking attacks, increase the reliability of IoT devices and IoT networks, for example to protect the battery power of such devices and hence to overcome the above-mentioned problems.

The method of the invention is defined according to the appended claim 1. The above-mentioned problems will be solved by a method of controlling an Internet-of-Things (IoT) device, the method comprising: monitoring functional behavior of the device; verifying the functional behavior and comparing the functional behavior with defined functional behavior limits of the device; initiating an action by a watchdog associated with the IoT device based on the comparison between the functional behavior and the defined or configured functional behavior limits of the IoT device.

An IoT device is a physical device that comprises at least two parts. The first part offers specific functionalities, e.g. for industrial or private applications. This can be, for example, a thermometer that measures a temperature. Its main purpose is not communication or computation. The second part is a typically wireless communication modem. It provides networking capabilities that allow the device to link to a typically wireless or wired communication network and to exchange data.

The Internet of things is the network of such nonstandard communication and computation devices within the existing Internet infrastructure. Its linked IoT devices enable new services and business applications for e.g. home and industry automation and monitoring purposes.

The IoT device can be generally described as a state machine. It has several states and functions that describe the transition from one state to another state. Configuration data and trigger events impact the execution and the behavior of the functions. The order and kind of states that are reached and the frequency of triggered state transitions characterize the functional behavior of the state machine. There are rules and limits for this behavior. Some of them can be easily monitored and compared to defined/configured functional behavior limits.

State transitions are understood as functions that are called or processed in the IoT device. These functions can be triggered internally or externally. For example, a device can be woken up by an external received signal to transmit data or an internal timer may cause the device to wake up for data transmission. The trigger event and the function can be corrupted due to a hardware/software failure or an external hacking attack. This can cause partial or total system failure up to complete device damage when e.g. the battery is completely discharged.

Configuration data include all IoT device and network provider specific data that affects the behavior of the functions and states. These are e.g. the access data of the network provider, performance data of the modem, e.g. supported and unsupported functionality, timing information and calibration data.

Defined and/or configured functional behavior limits are understood as a kind of system or device setup data that defines e.g. time limits, counting limits and periods that should be advantageously derived from the IoT standard. The functional behavior limit data can be stored in the ROM code of the device. Thereby, the data are configurable but protected from software access, e.g. due to hacking attacks. The watchdog compares the defined/configured functional behavior limits with the observed state machine behavior, hence the functional behavior of the IoT device. In this invention the watchdog is mainly a configurable hardware counter that compares measured counter values with time stamps and the given behavior limits for certain states and functions. The watchdog monitors e.g. how often and how long in a defined period functions are called and executed. So, in an embodiment, the method further comprising: if the functional behavior exceeds a defined functional behavior limit the watchdog becomes active and triggers a dedicated system recovery sequence. If one of the measured access times or counter numbers, e.g. for one special function or state, exceed the defined limit in the defined period, the watchdog becomes active and triggers a sequence of functions to recover the system from malfunction to normal operation, so-called system recovery sequence.

In another embodiment the method further comprising: if the functional behavior stays beyond a defined functional behavior limit the watchdog remains passive and monitors and compares the functional behavior with the defined functional behavior limits of the device. Staying beyond a defined limit means that the system or device runs without failures. The watchdog does not need to interrupt the process in order to save battery power and to protect the device from complete failure.

It is also preferred if the watchdog of the functional behavior is integrated into other common watchdog systems that are monitoring parameters, especially temperature or aging or under- and overvoltage values. The decision process to become the watchdog active may become more complex but this increases the reliability and lifetime by a multiple.

In another preferred embodiment of the inventive method the watchdog is a configurable hardware counter that monitors the functional behavior by a counter value and the counter value is compared with defined time stamps and given time limits and / or by value levels compared with defined limits. A counter value is a parameter which is used to detect how often e.g. a process has been requested, for example a RF reception and / or transmission request. Due to the counter value that is compared with defined time stamps and given time limits configured in the functional behavior limits the watchdog decides if a process must be interrupted or not. The same applies to value levels which are also parameters that are monitored and compared with pre-defined functional behavior limits in the system configuration data.

The special effect will be seen therein, that by simply measuring and monitoring system parameters the overall performance and reliability of the device and hence the lifetime of the device can be increased. Detecting a system issue and triggering a dedicated system recovering sequence without the need of a human operator has the effect, that malfunctions of the device can be detected and repaired quickly and self-contained. This prevents the device from wasting battery power for e.g. high computation load, permanent reboot or permanent RF transmission. This is especially important for IoT devices which are fabricated in high volume for low price and are used in scenarios where these devices cannot be accessed physically once they are put into operation.

In a preferred embodiment the system recovery sequence comprises a watchdog, a system reset routine, a reset hold and release timer, a secured firmware recovery routine and a system reboot routine.

Thereby, the system reset routine, the reset hold and release timer, the secured firmware recovery routine and the system reboot routine are configurable. This is needed to automatically adapt the recovery procedure to the issue occurred. And at least if the issue cannot be solved to stop endless triggering of the system recovery sequence, to protect the battery power, to wait for an operator and not to distort the network by unwanted transmissions, etc.

It is very advantageous if the watchdog comprises a watchdog action counter. The watchdog counter is used to determine if the system recovery sequence was successful or not. This special watchdog action counter is used to monitor how often in a certain time the watchdog triggers an action. It also considers the runtime of the system recovery sequence.

The system recovery sequence was unsuccessful if the time between the completed system recovery sequence and the new triggered action is relatively short. Than the system recovery sequence is going to rerun in an increased reset level with other parameters. The amount of reset parameters and the reset and hold time will be increased. The reset parameters may change as well. From a certain reset level upwards is may also be possible to replace the firmware in a secured firmware recovery mode.

If the time between the completed system recovery sequence and the new triggered action is rather long a new issue is occurred. The system recovery sequence starts with its initial configuration.

The system reset routine is used to reset certain system parameters. The amount and the values of parameters that were reset depend on the reset level that is determined from the watchdog action counter. The more the system recovery sequence is triggered, which increases the watchdog action counter the more parameters were restored to default.

The system reboot routine is used to reboot the system with the new parameters.

In a further embodiment of the invention the secured firmware recovery mode can be accessed by the system recovery sequence from a certain reset level upwards to replace the system firmware. To do so the system can somehow wait for external help e.g. by an administrator which can replace the system firmware.

The reset and hold time can be increased as a function of the reset level and/or at a certain reset level the device can be switched off by itself not distort other devices or network services.

It is also preferred if the system recovery sequence can reset different system parameters depending on the watchdog action counter which may lead to a factory reset at some stage.

In another embodiment of the inventive method, the system recovery sequence can stop working or wait for external action/triggering depending on the watchdog action counter. To stop or wait very long for external action / triggering is useful if the system recovery sequence cannot help to overcome the root cause of the detected issue.

In another preferred embodiment of the inventive method the watchdog data, e.g. the reset level value, timers and counters in the IoT device are kept and running while the IoT device is in reset state to be able to determine the configuration for the next run of the system recovery sequence.

Furthermore, it is advantageous if the watchdog and the system recovery sequence are used to prevent a battery of the IoT device from discharging by interrupting processes that exceed defined time limits or counting limits and periods. By interrupting processes which are caused by a malfunction or a hacking attack of the device or system, the battery of the device can be prevented from discharging. The malfunction or hacking attack are detected by the abnormal behavior of the device, e.g. if the device permanently try to reboot or has an abnormal high computation load. This abnormal behavior will be detected by the watchdog which monitors timer limits and reset levels of the device.

The invention will be explained in more detail using an exemplary embodiment.

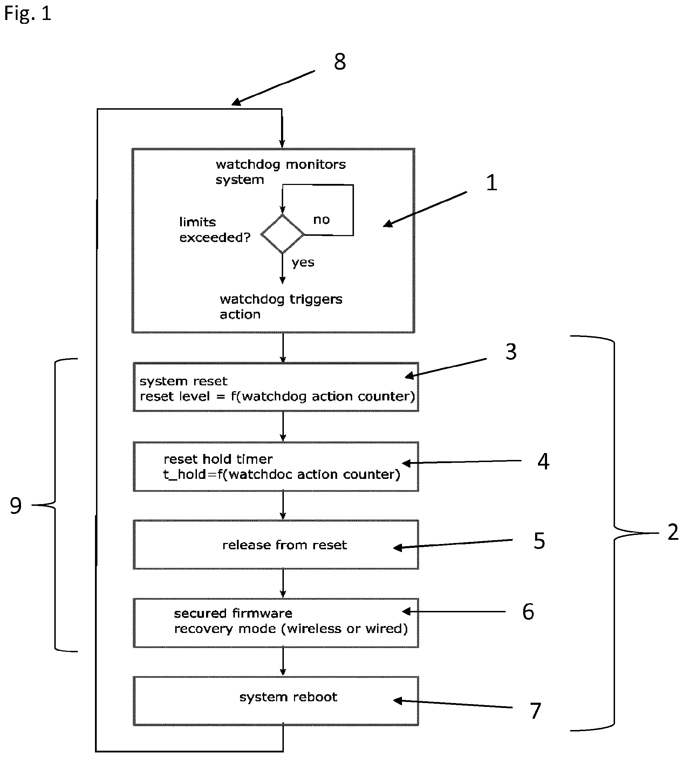

The appended drawing show
- Fig. 1: system recovery sequence triggered by a watchdog.

Figure 1 shows the inventive method of controlling a data processing IoT device especially the battery of such device which comprises a hardware watchdog 1 that monitors how often and how long in a defined period basic system functions are called to monitor the amount of drawn battery power.

If one of the measured access times or counter numbers exceeds the given limit in the defined period, the watchdog becomes active and triggers a dedicated system recovery sequence 2. The system recovery sequence can automatically adapt to the problem encountered and stop if the problem cannot be solved. This prevents the system from unwanted battery discharging which may lead to complete system failure as the battery of IoT devices often cannot be replaced or recharged. Only the watchdog 1 together with a smart system recovery sequence 2 provides the benefit of extended battery protection. This enhances the system robustness against software issues and hacking attacks. The system becomes more secured against software/hardware failures and hacking attacks to protect the system from permanent device damage.

This invention describes a hardware watchdog 1 that monitors how often and how long in a defined period system functions are called. Some important system functions are RF reception, RF transmission and system reboot. If one of the measured access times or counter numbers exceed the defined limit in the defined period, the watchdog 1 becomes active and triggers a dedicated system recovery sequence 2, see figure 1.

The watchdog 1 is a configurable hardware counter that compares measured counter values with time stamps and given time limits.

The watchdog configuration data, e.g. time limits, counting limits and periods should be derived from the IoT standard. They should be configurable but protected from software access e.g. due to hacking attacks. So, parameters stored in the ROM code may be the preferred solution.

The system recovery sequence 2 should in general consist of the elements listed below. External access to replace the system firmware 6 should be possible as well but may not be required. The reset hold time 4, see figure 1, should also be depending on a watchdog counter value. As an example, it does not make sense to prevent from permanent system reboot 7 if the watchdog only calls a reboot sequence. If the loop 8 "watchdog triggers action - system recovery sequence - watchdog triggers action" cannot be leaved by the system itself the reset hold time 4 should be increased depending on a watchdog action counter value. To do so the system can somehow wait for external help e.g. by an administrator which can replace the system firmware. This wait time can be increased or at a certain limit of reboots the device can be switched by itself not distort other devices or network services.

The reset level 3 should also depend on the amount watchdog action counts is a certain period. So, e.g. at higher cycle counts the system should not only apply a system reboot 7. It can also start to reset different system parameters depending on the watchdog action counter which may e.g. lead to a factory reset at some stage.

The system reset 3 should be independent from the watchdog. This means all watchdog data, timers and counters should be kept and running while system is in reset state.

The watchdog 1 may observe more processes and functions. The decision process to become the watchdog 1 active may become more complex. Further parameters e.g. temperature may be taken under consideration as well. The watchdog 1 maybe integrated into other standard watchdogs e.g. temperature, aging or overvoltage watchdogs.

The recovery sequence 2 may be improved by more added elements, sub sequences and conditional sequence executions.

### List of reference signs

- 1: watchdog
- 2: system recovery sequence
- 3: system reset
- 4: reset hold timer
- 5: release from reset
- 6: secured firmware recovery routine
- 7: system reboot routine
- 8: loop
- 9: system reset routine

## Claims

1. A method of monitoring an Internet-of-Things (IoT) device, the method comprising: monitoring functional behavior of the device; verifying the functional behavior and comparing the functional behavior with defined functional behavior limits of the device; initiating an action (2) by a watchdog (1) associated with the IoT device based on the comparison between the functional behavior and the defined or configured functional behavior limits of the IoT device, whereas
if the functional behavior exceeds a defined functional behavior limit the watchdog (1) becomes active and triggers a dedicated system recovery sequence (2), whereas the watchdog of the functional behavior is integrated into other common watchdog systems that are monitoring parameters, especially temperature or aging or under- and overvoltage values, whereas the watchdog is a configurable hardware counter that monitors the functional behavior by a counter value and the counter value is compared with defined time stamps and given time limits and / or by value levels compared with defined limits.

2. The method according to claim 1, the method further comprising: if the functional behavior stays beyond a defined functional behavior limit the watchdog (1) remains passive and monitors and compares the functional behavior with the defined functional behavior limits of the device.

3. The method according to claim 1, wherein the system recovery sequence (2) comprises the watchdog (1), a system reset routine (9), a reset hold and release timer, a secured firmware recovery routine (6) and a system reboot routine (7).

4. The method according to claim 3, wherein the system reset routine (9), the reset hold and release timer, the secured firmware recovery routine (6) and the system reboot routine (7) are configurable.

5. The method according to any of the claims 1 to 4, wherein the watchdog (1) comprises a watchdog action counter.

6. The method according to any of claims 1 to 5, wherein the secured firmware recovery routine (6) can be accessed by the system recovery sequence (2) from a certain reset level upwards to replace the system firmware.

7. The method according to any of claims 1 to 6, wherein the system recovery sequence (2) can reset different system parameters depending on the watchdog action counter which may lead to a factory reset at some stage.

8. The method according to any of claims 1 to 7, wherein the system recovery sequence (2) can stop working or wait for external action/triggering depending on the watchdog action counter.

9. A method according to any of claims 1 to 8, wherein the watchdog data, e.g. the reset level value, timers and counters in the IoT device are kept and running while the IoT device is in reset state to be able to determine the configuration for the next run of the system recovery sequence.

10. A method according to any of claims 1 to 9, wherein the watchdog and the system recovery sequence (2) are used to prevent a battery of the IoT device from discharging by interrupting processes that exceed defined time limits or counting limits and periods.

## Patentansprüche

1. Verfahren zum Überwachen einer Internet-of-Things(IoT)-Vorrichtung, wobei das Verfahren umfasst: Überwachen des Funktionsverhaltens der Vorrichtung; Überprüfen des Funktionsverhaltens und Vergleichen des Funktionsverhaltens mit definierten Grenzen des Funktionsverhaltens der Vorrichtung;
Einleiten einer Aktion (2) durch einen Watchdog (1), der der IoT-Vorrichtung zugeordnet ist, basierend auf dem Vergleich zwischen dem Funktionsverhalten und den definierten oder konfigurierten Grenzen des Funktionsverhaltens der IoT-Vorrichtung, wobei
wenn das Funktionsverhalten eine definierte Grenze des Funktionsverhaltens überschreitet, der Watchdog (1) aktiv wird und eine dedizierte Systemwiederherstellungsfolge (2) auslöst, wobei der Watchdog des Funktionsverhaltens in andere übliche Watchdog-Systeme integriert ist, die Parameter wie insbesondere Temperatur- oder Alterungs- oder Unter- und Überspannungswerte überwachen, wobei der Watchdog ein konfigurierbarer Hardware-Zähler ist, der das Funktionsverhalten durch einen Zählwert überwacht und der Zählwert mit definierten Zeitstempeln und vorgegebenen Zeitgrenzen und/oder durch Wertstufen mit definierten Grenzen verglichen wird.

2. Verfahren nach Anspruch 1, wobei das Verfahren ferner umfasst: Wenn das Funktionsverhalten über eine definierte Grenze des Funktionsverhaltens hinaus bleibt, bleibt der Watchdog (1) passiv und überwacht und vergleicht das Funktionsverhalten mit den definierten Grenzen des Funktionsverhaltens der Vorrichtung.

3. Verfahren nach Anspruch 1, wobei die Systemwiederherstellungsfolge (2) den Watchdog (1), eine Systemrücksetzroutine (9), einen Rücksetzhalte- und Freigabezeitgeber, eine gesicherte Firmware-Wiederherstellungsroutine (6) und eine Systemneustartroutine (7) umfasst.

4. Verfahren nach Anspruch 3, wobei die Systemrücksetzroutine (9), der Rücksetzhalte- und Freigabezeitgeber, die gesicherte Firmware-Wiederherstellungsroutine (6) und die Systemneustartroutine (7) konfigurierbar sind.

5. Verfahren nach einem der Ansprüche 1 bis 4, wobei der Watchdog (1) einen Watchdog-Aktionszähler umfasst.

6. Verfahren nach einem der Ansprüche 1 bis 5, wobei auf die gesicherte Firmware-Wiederherstellungsroutine (6) durch die Systemwiederherstellungsfolge (2) ab einer bestimmten Rücksetzstufe aufwärts zugegriffen werden kann, um die Systemfirmware zu ersetzen.

7. Verfahren nach einem der Ansprüche 1 bis 6, wobei die Systemwiederherstellungsfolge (2) verschiedene Systemparameter in Abhängigkeit vom Watchdog-Aktionszähler zurücksetzen kann, was zu einem gewissen Zeitpunkt zu einer Werksrückstellung führen kann.

8. Verfahren nach einem der Ansprüche 1 bis 7, wobei die Systemwiederherstellungsfolge (2) in Abhängigkeit vom Watchdog-Aktionszähler die Arbeit einstellen oder auf eine externe Aktion/Auslösung warten kann.

9. Verfahren nach einem der Ansprüche 1 bis 8, wobei die Watchdog-Daten, z. B. der Wert der Rücksetzstufe, die Zeitgeber und Zähler in der IoT-Vorrichtung gehalten werden und laufen, während sich die IoT-Vorrichtung im Rücksetzzustand befindet, um die Konfiguration für den nächsten Lauf der Systemwiederherstellungsfolge bestimmen zu können.

10. Verfahren nach einem der Ansprüche 1 bis 9, wobei der Watchdog und die Systemwiederherstellungsfolge (2) dazu verwendet werden, das Entladen einer Batterie der IoT-Vorrichtung durch Unterbrechen von Vorgängen, die definierte Zeitgrenzen überschreiten, oder durch Zählen von Grenzen und Zeitdauern zu verhindern.

## Revendications

1. Procédé de surveillance d'un dispositif de l'Internet des objets (IoT), le procédé comprenant : la surveillance du comportement fonctionnel du dispositif ; la vérification du comportement fonctionnel et la comparaison du comportement fonctionnel avec des limites définies du comportement fonctionnel du dispositif ; l'initiation d'une action (2) par un chien de garde (1) associé au dispositif IoT sur la base de la comparaison entre le comportement fonctionnel et les limites définies ou configurées du comportement fonctionnel du dispositif IoT, dans lequel
si le comportement fonctionnel dépasse une limite définie du comportement fonctionnel, le chien de garde (1) devient actif et déclenche une séquence dédiée de récupération de système (2), dans lequel le chien de garde du comportement fonctionnel est intégré à d'autres systèmes communs de chien de garde qui surveillent les paramètres, en particulier la température ou le vieillissement ou les valeurs de sous-tension et de surtension, dans lequel le chien de garde est un compteur matériel pouvant être configuré qui surveille le comportement fonctionnel au moyen d'une valeur de compteur et la valeur de compteur est comparée avec des horodatages définis et des limites temporelles données et/ou au moyen de niveaux de valeurs comparés avec des limites définies.

2. Procédé selon la revendication 1, le procédé comprenant en outre : si le comportement fonctionnel reste dans une limite définie du comportement fonctionnel, le chien de garde (1) reste passif et surveille et compare le comportement fonctionnel avec les limites définies du comportement fonctionnel du dispositif.

3. Procédé selon la revendication 1, dans lequel la séquence de récupération de système (2) comprend le chien de garde (1), un programme de réinitialisation du système (9), une minuterie de retenue et déclenchement de réinitialisation, un programme sécurisé de récupération de microprogramme (6) et un programme de redémarrage du système (7).

4. Procédé selon la revendication 3, dans lequel le programme de réinitialisation du système (9), la minuterie de retenue et déclenchement de réinitialisation, le programme sécurisé de récupération de microprogramme (6) et le programme de redémarrage du système (7) peuvent être configurés.

5. Procédé selon l'une quelconque des revendications 1 à 4, dans lequel le chien de garde (1) comprend un compteur d'actions du chien de garde.

6. Procédé selon l'une quelconque des revendications 1 à 5, dans lequel le programme sécurisé de récupération de matériel (6) est accessible par la séquence de récupération de système (2) à partir d'un certain niveau de réinitialisation vers le haut pour remplacer le microprogramme du système.

7. Procédé selon l'une quelconque des revendications 1 à 6, dans lequel la séquence de récupération de système (2) peut réinitialiser différents paramètres système en fonction du compteur d'actions du chien de garde qui peut entraîner une réinitialisation d'usine à un certain niveau.

8. Procédé selon l'une quelconque des revendications 1 à 7, dans lequel la séquence de récupération de système (2) peut cesser de fonctionner ou attendre une action/un déclenchement extérieur(e) en fonction du compteur d'actions du chien de garde.

9. Procédé selon l'une quelconque des revendications 1 à 8, dans lequel les données du chien de garde, par exemple la valeur de niveau de réinitialisation, les minuteries et les compteurs dans le dispositif IoT, sont conservées et fonctionnent pendant que le dispositif IoT est dans l'état de réinitialisation afin de pouvoir déterminer la configuration pour la prochaine séquence de récupération de système.

10. Procédé selon l'une quelconque des revendications 1 à 9, dans lequel le chien de garde et la séquence de récupération de système (2) sont utilisés pour empêcher le déchargement d'une batterie du dispositif de l'IoT par l'interruption des processus qui dépassent des limites temporelles définies ou par le comptage de limites et de périodes.
